# EUROPÄISCHE PATENTSCHRIFT

(11) **EP 1 013 129 B1**
(45) Veröffentlichungstag und Bekanntmachung des Hinweises auf die Patenterteilung: **06.08.2008**
(21) Anmeldenummer: 98951202.5
(22) Anmeldetag: 24.08.1998
(51) Int. Cl.: H04Q 7/38

(54) **ROAMING VON MOBILTEILEN IN ZUMINDEST TEILWEISE ASYNCHRONEN DRAHTLOSEN TELEKOMMUNIKATIONSNETZEN, INSBESONDERE DECT-NETZEN**
ROAMING OF MOBILE PARTS IN AT LEAST PARTIALLY ASYNCHRONOUS WIRELESS TELECOMMUNICATIONS NETWORKS, ESPECIALLY DECT NETWORKS
ITINERANCE DE PARTIES MOBILES DANS DES RESEAUX DE TELECOMMUNICATIONS DANS FIL AU MOINS PARTIELLEMENT ASYNCHRONES, NOTAMMENT DES RESEAUX DECT

(30) Priorität: 02.09.1997 DE 19738340
(43) Veröffentlichungstag der Anmeldung: 28.06.2000
(73) Patentinhaber: Siemens Home and Office Communication Devices GmbH & Co. KG, 81379 München (DE)
(72) Erfinder: SCHULZ, Egon, D-80993 München (DE); BIEDERMANN, Rolf, D-48683 Ahaus (DE)
(86) Internationale Anmeldenummer: PCT/DE1998/002474
(87) Internationale Veröffentlichungsnummer: WO 1999/012372

(56) Entgegenhaltungen:
- WO-A-94/21057
- WO-A-96/38991
- WO-A-97/15160
- US-A- 5 448 569

## Beschreibung

In Nachrichtensystemen mit einer Nachrichtenübertragungsstrecke zwischen einer Nachrichtenquelle und einer Nachrichtensenke werden zur Nachrichtenverarbeitung und -übertragung Sende- und Empfangsgeräte verwendet, bei denen
1) die Nachrichtenverarbeitung und Nachrichtenübertragung in einer bevorzugten Übertragungsrichtung (Simplex-Betrieb) oder in beiden Übertragungsrichtungen (Duplex-Betrieb) erfolgen kann,
2) die Nachrichtenverarbeitung analog oder digital ist,
3) die Nachrichtenübertragung über die Fernübertragungsstrekke drahtlos auf der Basis von diversen Nachrichtenübertragungsverfahren FDMA (**F**requency **D**ivision **M**ultiple **A**ccess), TDMA (**T**ime **D**ivision **M**ultiple **A**ccess) und/oder CDMA (**C**ode **D**ivision **M**ultiple **A**ccess) - z.B. nach Funkstandards wie DECT, GSM, WACS oder PACS, IS-54, IS-95, PHS, PDC etc. **[**vgl. IEEE Communications Magazine, January 1995, Seiten 50 bis 57; D.D. Falconer et al:"Time Division Multiple Access Methods for Wireless Personal Communications"] und/oder drahtgebunden erfolgt.

"Nachricht" ist ein übergeordneter Begriff, der sowohl für den Sinngehalt (Information) als auch für die physikalische Repräsentation (Signal) steht. Trotz des gleichen Sinngehaltes einer Nachricht - also gleicher Information - können unterschiedliche Signalformen auftreten. So kann z.B. eine einen Gegenstand betreffende Nachricht
(1) in Form eines Bildes,
(2) als gesprochenes Wort,
(3) als geschriebenes Wort,
(4) als verschlüsseltes Wort oder Bild übertragen werden.

Die Übertragungsart gemäß (1) ... (3) ist dabei normalerweise durch kontinuierliche (analoge) Signale charakterisiert, während bei der Übertragungsart gemäß (4) gewöhnlich diskontinuierliche Signale (z.B. Impulse, digitale Signale) entstehen.

Ausgehend von dieser allgemeinen Definition eines Nachrichtensystems bezieht sich die Erfindung auf Telekommunikationssysteme für drahtlose, zumindest teilweise asynchrone Telekommunikationsnetze, insbesondere DECT-Systeme für zumindest teilweise asynchrone DECT-Netze, gemäß dem Oberbegriff des Patentanspruches 1 und gemäß dem Oberbegriff des Patentanspruches 20.

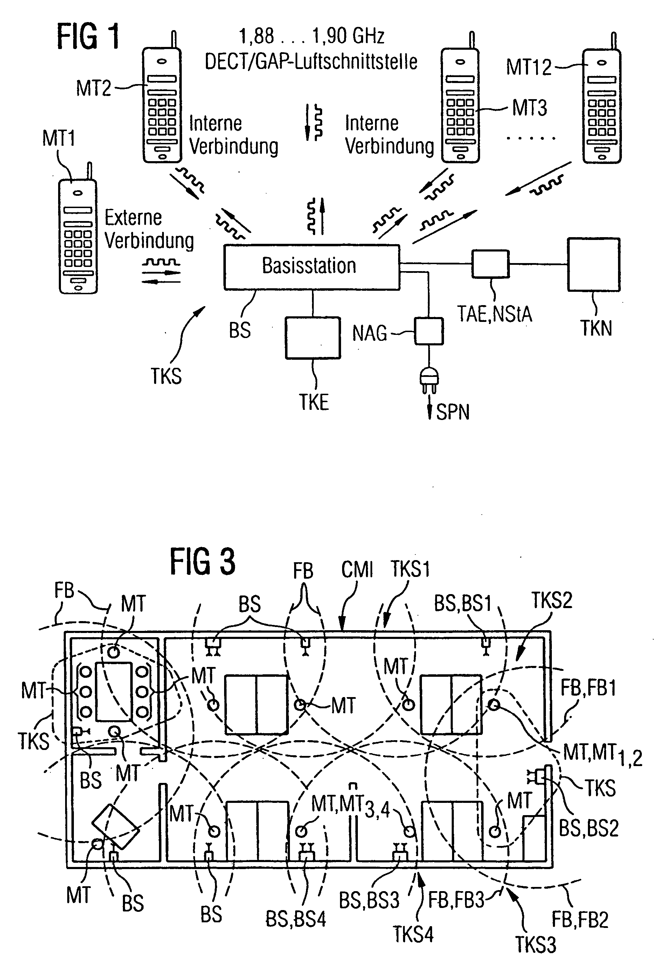

Telekommunikationssysteme der vorstehend definierten Art sind beispielsweise DECT-Systeme **[D**igital **E**nhanced (früher: European) Cordless **T**elecommunication; *vgl*. ***(1):*** Nachrichtentechnik Elektronik 42 (1992) Jan./Feb. Nr. 1, Berl*in, DE;* U. Pilger "Struktur des DECT-Standards", Seiten 23 bis 29 in Verbindung mit der ETSI-Publikation ETS 300175-1...9, Okt. 1992*; **(2)** :* Telcom Report 16 (1993), Nr. 1*,* J. H. Koch: "Digitaler Komfort für schnurlose Telekommunikation - DECT-Standard eröffnet neue Nutzungsgebiete", Seiten 26 und 27*; **(3):** tec 2*/*93 - Das technische Magazin von* Ascom "Wege zur uni versellen mobilen Telekommunikation", Seiten 35 bis 42*; **(4):*** Philips Telecommunication Review, Vol. 49, No. 3, Sept. 1991*,* R. J. Mulder:" DECT, a universal cordless access system*"; **(5)** :* WO 93/21719 *(**FIG 1 bis 3* *mit dazugehöriger Beschreibung)] oder GAP-Systeme (Generic Access Profile; vgl. ETSI-Publikation ETS 300444, December 1995, ETSI, FR)*, die beispielsweise gemäß der Darstellung in FIGUR 1 aufgebaut sein können. Der GAP-Standard ist eine Untermenge des DECT-Standards, dem die Aufgabe zukommt, die Interoperabilität der DECT-Luftschnittstelle für Telefonanwendungen sicherzustellen.

Nach dem DECT/GAP-Standard können gemäß der Darstellung in FIGUR 1 an einer DECT/GAP-Basisstation BS über eine für den Frequenzbereich zwischen 1,88 und 1, 94 GHz ausgelegte DECT/GAP-Luftschnittstelle maximal 12 Verbindungen nach dem TDMA/FDMA/TDD-Verfahren (**T**ime **D**ivision **M**ultiple **A**ccess/**F**requency **D**ivision **M**ultiple **A**ccess/**T**ime **D**ivision **D**uplex) parallel zu DECT/GAP-Mobilteilen MT1...MT12 aufgebaut werden. Die Zahl 12 ergibt sich aus einer Anzahl "k" von für den Duplex-betrieb eines DECT/GAP-Systems zur Verfügung stehenden Zeitschlitzen bzw. Telekommunikationskanälen (k = 12). Die Verbindungen können dabei intern und/oder extern sein. Bei einer internen Verbindung können zwei an der Basisstation BS registrierte Mobilteile, z.B. das Mobilteil MT2 und das Mobilteil MT3, miteinander kommunizieren. Für den Aufbau einer externen Verbindung ist die Basisstation BS mit einem Telekommunikationsnetz TKN, z.B. in leitungsgebundener Form über eine Telekommunikationsanschlußeinheit TAE bzw. eine Nebenstellenanlage NStA mit einem leitungsgebundenen Telekommunikationsnetz oder gemäß der WO 95/05040 in drahtloser Form als Repeaterstation mit einem übergeordneten Telekommunikationsnetz, verbunden. Bei der externen Verbindung kann man mit einem Mobilteil, z.B. mit dem Mobilteil MT1, über die Basisstation BS, die Telekommunikationsanschlußeinheit TAE bzw. Nebenstellenanlage NStA mit einem Teilnehmer in dem Telekommunikationsnetz TKN kommunizieren. Besitzt die Basisstation BS - wie im Fall des Gigaset 951 (Siemens Schnurlostelefon, vgl. telcom Report 16, (1993) Heft 1, Seiten 26 und 27) - nur einen Anschluß zu der Telekommunikationsanschlußeinheit TAE bzw. der Nebenstellenanlage NStA, so kann nur eine externe Verbindung aufgebaut werden. Hat die Basisstation BS - wie im Fall des Gigaset 952 (Siemens Schnurlostelefon; vgl. telcom Report 16, (1993), Heft 1, Seiten 26 und 27) - zwei Anschlüsse zu dem Telekommunikationsnetz TKN, so ist zusätzlich zu der externen Verbindung mit dem Mobilteil MT1 eine weitere externe Verbindung von einem an die Basisstation BS angeschlossenen leitungsgebundenen Telekommunikationsendgerät TKE möglich. Dabei ist es prinzipiell auch vorstellbar, daß ein zweites Mobilteil, z.B. das Mobilteil MT12, anstelle des Telekommunikationsendgerätes TKE den zweiten Anschluß für eine externe Verbindung nutzt. Während die Mobilteile MT1...MT12 mit einer Batterie oder einem Akkumulator betrieben werden, ist die als schnurlose Klein-Vermittlungsanlage ausgebildete Basisstation BS über ein Netzanschlußgerät NAG an ein Spannungsnetz SPN angeschlossen.

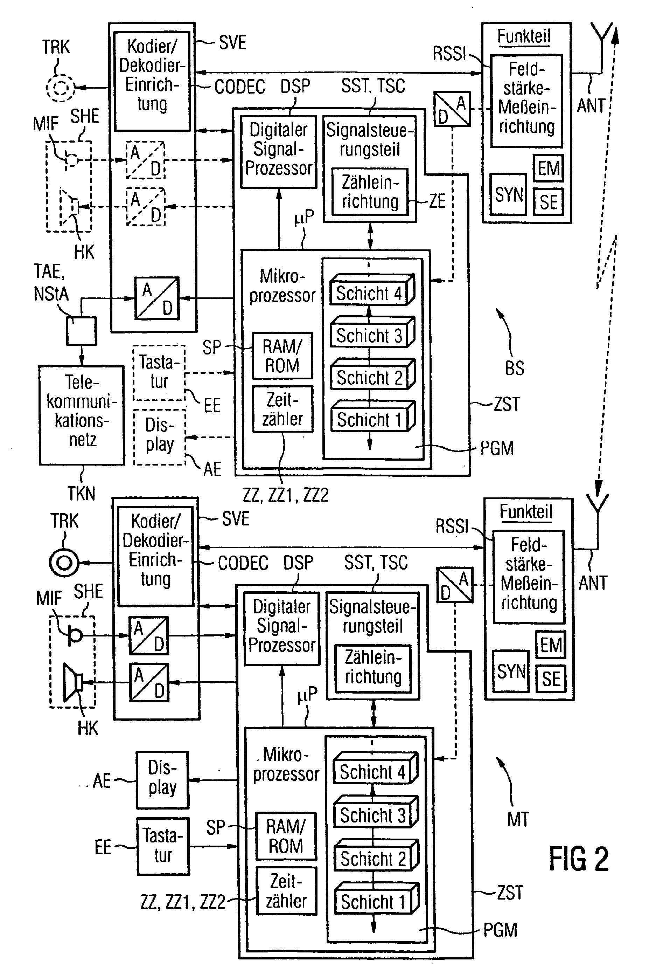

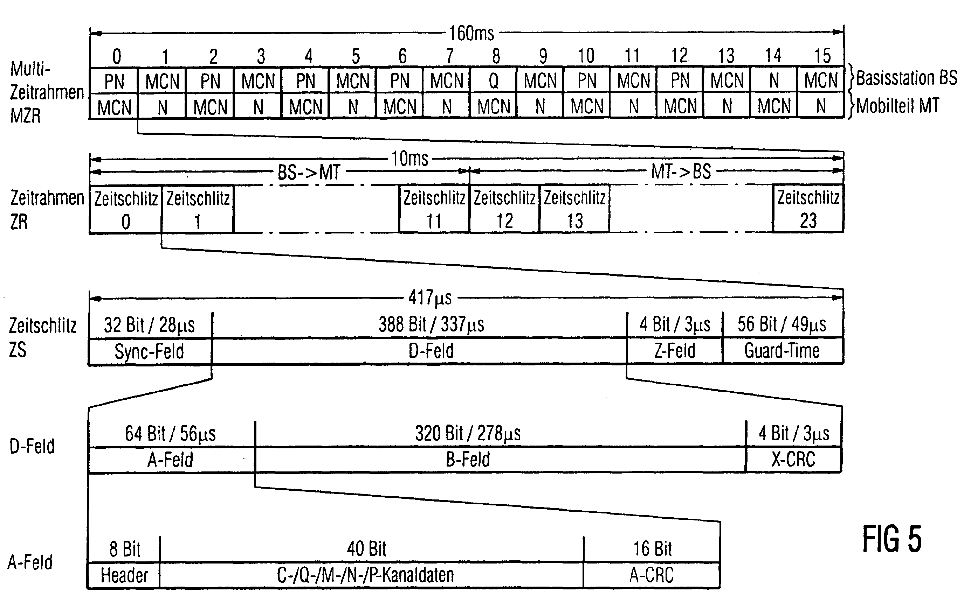

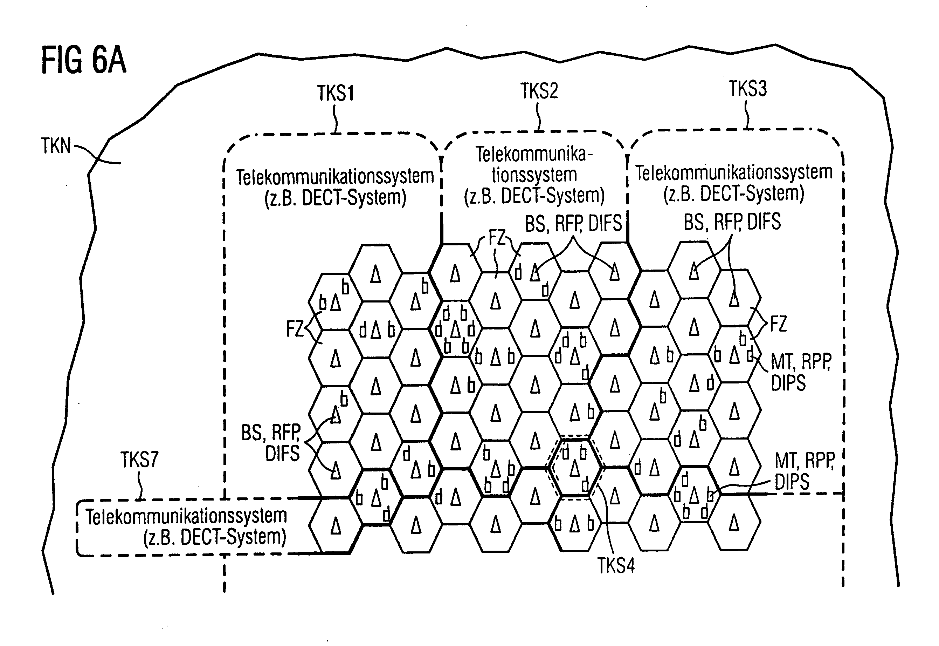

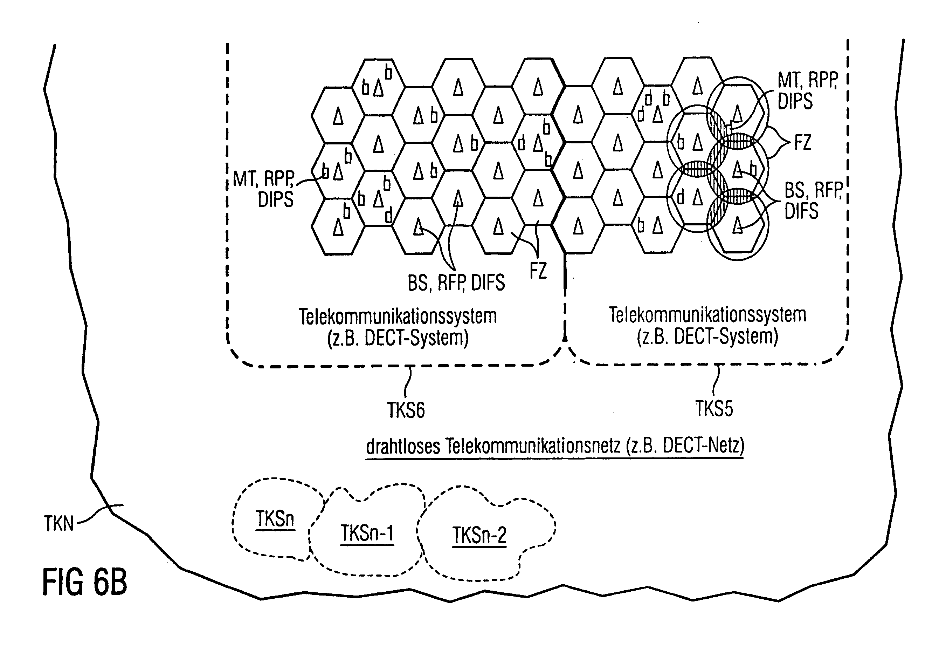

FIGUR 2 zeigt ausgehend von der Druckschrift Components 31 (1993), Heft 6, Seiten 215 bis 218*; S. Althammer, D. Brückmann: "Hochoptimierte IC's für DECT-Schnurlostelefone"* und in Anlehnung an die WO 96/38991 (vgl. Figuren 5 und 6 mit der jeweils dazugehörigen Beschreibung) den prinzipiellen Schaltungsaufbau der Basisstation BS und des Mobilteils MT. Die Basisstation BS und das Mobilteil MT weisen danach ein Funkteil FKT mit einer zum Senden und Empfangen von Funksignalen zugeordneten Antenne ANT, eine Signalverarbeitungseinrichtung SVE und eine Zentrale Steuerung ZST auf, die in der dargestellten Weise miteinander verbunden sind. In dem Funkteil FKT sind im wesentlichen die bekannten Einrichtungen wie Sender SE, Empfänger EM und Synthesizer SYN enthalten. In der Signalverarbeitungseinrichtung SVE ist u.a. eine Kodier/Dekodiereinrichtung CODEC enthalten. Die Zentrale Steuerung ZST weist sowohl für die Basisstation BS als für das Mobilteil MT einen Mikroprozessor µP mit einem nach dem OSI/ISO-Schichtenmodell **[***vgl. **(1)** :* Unterrichtsblätter - Deutsche Telekom, Jg. 48, 2/1995, Seiten 102 bis 111*; **(2):** ETSI-Publikation ETS 300175-1...9, Oktober 1992***]** aufgebauten Programmodul PGM, einen Speicher SP zur Speicherung von für die Basisstation BS bzw. das Mobilteil MT bestimmte Informationen und einen als Timer ausgebildeten Zeitzähler ZZ, ZZ1, ZZ2 zur Ermittlung von basisstations- bzw. mobilteilspezifischen Zeitinformationen, einen Signalsteuerungsteil SST und einen Digitalen Signalprozessor DSP auf, die in der dargestellten Weise miteinander verbunden sind. Von den im Schichtenmodell definierten Schichten sind nur die unmittelbar für die Basisstation BS und das Mobilteil MT wesentlichen ersten vier Schichten dargestellt. Das Signalsteuerungssteil SST ist in der Basisstation BS als Time Switch Controller TSC und in dem Mobilteil MT als Burst Mode Controller BMC ausgebildet. Der wesentliche Unterschied zwischen den beiden Signalsteuerungsteilen TSC, BMC besteht darin, daß der basisstationsspezifische Signalsteuerungsteil TSC gegenüber dem mobilteilspezifischen Signalsteuerungsteil BMC zusätzlich Vermittlungsfunktionen (Switch-Funktionen) übernimmt. Die Signalsteuerungsteile TSC, BMC enthalten jeweils eine Zähleinrichtung ZE mit einem Bit-, Zeitschlitz- und Zeitrahmenzähler.

Die prinzipielle Funktionsweise der vorstehend aufgeführten Schaltungseinheiten ist beispielsweise in der vorstehend zitierten Druckschrift Components 31 (1993), Heft 6, Seiten 215 bis 218 beschrieben.

Der beschriebene Schaltungsaufbau nach FIGUR 2 wird bei der Basisstation BS und dem Mobilteil MT gemäß deren Funktion in dem DECT/GAP-System nach FIGUR 1 durch zusätzliche Funktionseinheiten ergänzt.

Die Basisstation BS ist über die Signalverarbeitungseinrichtung SVE und der Telekommunikationsanschlußeinheit TAE bzw. der Nebenstellenanlage NStA mit dem Telekommunikationsnetz TKN verbunden. Als Option kann die Basisstation BS noch eine Bedienoberfläche aufweisen (in FIGUR 2 gestrichelt eingezeichnete Funktionseinheiten), die z.B. aus einer als Tastatur ausgebildeten Eingabeeinrichtung EE, einer als Display ausgebildeten Anzeigeeinrichtung AE, einer als Handapparat mit Mikrofon MIF und Hörkapsel HK ausgebildeten Sprech-/Höreinrichtung SHE sowie einer Tonrufklingel TRK besteht.

Das Mobilteil MT weist die bei der Basisstation BS als Option mögliche Bedienoberfläche mit den zu dieser Bedienoberfläche gehörenden vorstehend beschriebenen Bedienelementen auf.

FIGUR 3 zeigt ausgehend von dem DECT-System nach FIGUR 1 ein zellulares DECT/GAP-Multisystem CMI (Cordless Multicell Integration), bei dem mehrere der vorstehend beschriebenen DECT/GAP-Systeme TKS mit jeweils einer Basisstation BS und einem/mehreren Mobilteil/en MT an einen beliebigen geographischen Ort, z.B. in einem Verwaltungsgebäude mit großräumigen Etagenbüros, konzentriert - im Sinne einer "Hot Spot"-Anordnung - vorhanden sind. Statt eines "geschlossenen" geographischen Ortes, wie das Verwaltungsgebäude, ist aber auch ein "offener" geographischer Ort mit strategischer Telekommunikationsbedeutung, z.B. Plätze in Großstädten mit einem hohen Verkehrsaufkommen, einer großen Ansammlung von Gewerbeeinheiten und einer großen Bewegung von Menschen, für die Installation eines zellularen DECT/GAP-Multisystems CMI möglich. Ein Teil der in dem Großraumbüro angeordneten Basisstationen BS sind dabei im Unterschied zu den in den FIGUREN 1 und 2 gezeigten Basisstationen gemäß der WO 94/10764 als Antenna Diversity-Basisstationen ausgebildet. Die Konzentration der DECT/GAP-Systeme TKS ist dabei so ausgeprägt (lückenlose Funkabdeckung des geographischen Ortes), daß einzelne DECT/GAP-Systeme TKS durch die sich überlappenden zellularen DECT/GAP-Funkbereiche FB in der gleichen Umgebung arbeiten.

Gleiche Umgebung kann dabei je nach Überlappungsgrad bedeuten, daß
a) eine erste Basisstation BS1 eines ersten Telekommunikationssystems TKS1 in einem ersten Funkbereich FB1 und eine zweite Basisstation BS2 eines zweiten Telekommunikationssystems TKS2 in einem zweiten Funkbereich FB2 angeordnet sind und Telekommunikationsverbindungen zu mindestens einem Mobilteil MT_{1,2} aufbauen können,
b) eine dritte Basisstation BS3 eines dritten Telekommunikationssystems TKS3 und eine vierte Basisstation BS4 eines vierten Telekommunikationssystems TKS4 in einem gemeinsamen dritten Funkbereich FB3 angeordnet sind und Telekommunikationsverbindungen zu mindestens einem Mobilteil MT_{3,4} aufbauen können.

Das in den FIGUREN 1 bis 3 dargestellte Schnurlos-Telekommunikations-Szenario, bei dem DECT-Mobilteile über eine DECT-Luftschnittstelle mit einer privaten (residential) DECT-Basisstation (FIGUR 1) bzw. mit einer oder mehreren privaten oder öffentlichen (public) DECT-Basisstationen (FIGUR 3) verbindbar sind, kann nun gemäß der Publikation *"Vortrag von* A. Elberse, M. Barry, G. Fleming zum Thema: "DECT Data Services - DECT in Fixed and Mobile Networks", 17./18. Juni 1996, Hotel Sofitel, Paris; Seiten 1 bis 12 *und Zusammenfassung"* dahingehend erweitert werden, daß die DECT-Mobilteile über die DECT-Luftschnittstelle mit privaten und öffentlichen DECT-Basisstationen verbindbar sind.

Dieses Szenario kann nun gemäß der WO95/05040 (vgl. Figuren 3 bis 8 mit der jeweils dazugehörigen Beschreibung) im Hinblick auf ein "Universelles **M**obil-**T**elekommunikations-**S**ystem" (UMTS) wiederum dahingehend erweitert werden, daß pikozellenbezogene Schnurlos-Telekommunikationssysteme (z.B. die bisher diskutierten DECT-Systeme unter CTM-Gesichtspunkten *(**C**ordless **T**erminal **M**obility; vgl. ETSI-Publikationen **(1):*** "IN Architecture and Functionality for the support of CTM", Draft Version 1.10, September 1995*; **(2):** "*Cordless Terminal Mobility (CTM) - Phase 1, Service Description", Draft DE/NA-010039, Version 6, 2.Oktober 1995*)* in eine übergeordnete Netzinfrastruktur (z.B. ISDN-, PSTN-, GSM- und/oder Satelliten-Netze) für Zugriffe *(vgl. ETSI-Publikation "CTM **A**ccess **P**rofile (CAP)" prETS 300824, November 1996)* einzubinden. Dies kann - gemäß dem Patentanspruch 1 der WO95/05040 durch eine als DECT-Repeater ausgebildete DECT-Basisstation erreicht werden. In einem universellen Mobil-Telekommunikationssystem wird DECT vorrangig als eine "Netzzugriffstechnologie" für mobile Kommunikationsdienste *(vgl. Vortrag von* A. Elberse, M. Barry, G. Fleming zum Thema: "DECT Data Services - DECT in Fixed and Mobile Networks", 17./18. Juni 1996, Hotel Sofitel, Paris; Seiten 1 bis 12 *und Zusammenfassung)* und nicht als Netz verstanden.

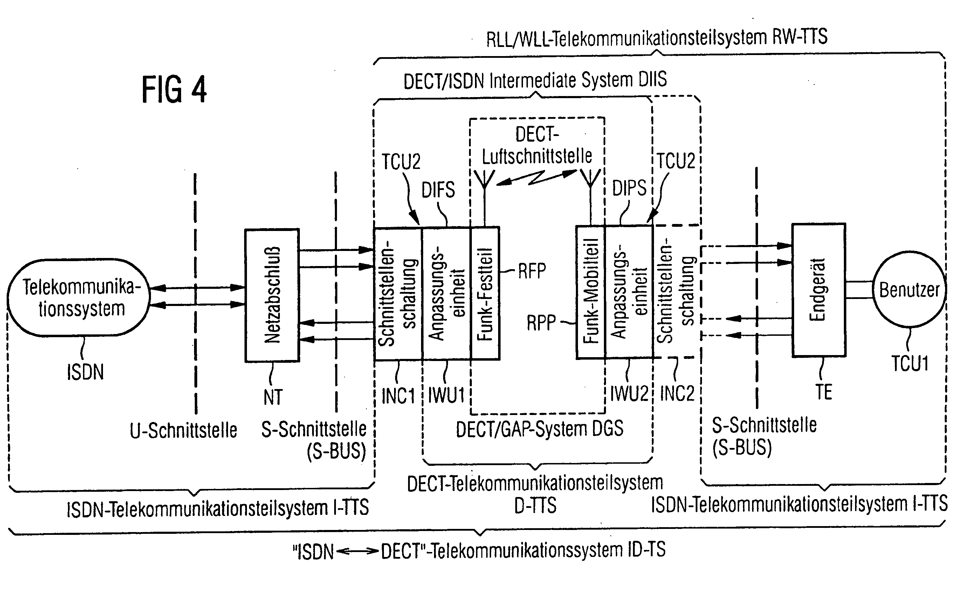

Stellvertretend für das vorstehend vorgestellte Szenario zeigt FIGUR 4 -ausgehend von den Druckschriften *"*Nachrichtentechnik Elektronik, Berlin 45, (1995), Heft 1, Seiten 21 bis 23 *und Heft 3, Seiten 29 und 30" sowie* IEE Colloquium 1993, 173; (1993), Seiten 29/1 - 29/7*; W.Hing, F.Halsall: "Cordless access to the ISDN basic rate service"* auf der Basis eines **D**ECT/**I**SDN **I**ntermediate **S**ystems DIIS gemäß der *ETSI-Publikation prETS 300822, Februar 1997* - ein "**I**SDN ↔ **D**ECT"-**T**elekommunikations**s**ystem ID-TS (Integrated Services **D**igital **N**etwork ↔ **D**igital **E**nhanced **C**ordless **T**elecommunication) mit einem **I**SDN-**T**elekommunikationsteilsystem I-TTS **[***vgl. Druckschrift "Nachrichtentechnik Elektronik, Berlin 41-43, **T**eil: 1 bis 10, **T**1: (1991) Heft 3, Sei ten 99 bis 102; **T**2: (1991) Heft 4, Seiten 138 bis 143; **T**3: (1991) Heft 5, Seiten 179 bis 182 und Heft 6, Seiten 219 bis 220; **T**4: (1991) Heft 6, Sei ten 220 bis 222 und (1992) Heft 1, Seiten 19 bis 20; **T**5: (1992) Heft 2, Seiten 59 bis 62 und (1992) Heft 3, Seiten 99 bis 102; **T**6: (1992) Heft 4, Seiten 150 bis 153; **T**7: (1992) Heft 6, Seiten 238 bis 241; **T**8: (1993) Heft 1, Seiten 29 bis 33; **T**9: (1993) Heft 2, Seiten 95 bis 97 und (1993) Heft 3, Seiten 129 bis 135; **T**10: (1993) Heft 4, Seiten 187 bis 190;"***]** und einem DECT-**T**elekommunikationsteilsystem D-TTS.

Das DECT-Telekommunikationsteilsystem D-TTS kann dabei - wie im weiteren näher ausgeführt werden wird - Bestandteil eines DECT/ISDN Intermediate Sysems DIIS bzw. eines RLL/WLL-Telekommunikationsteilsystems RW-TTS sein. Das DECT-Telekommunikationsteilsystem D-TTS und somit das DECT/ISDN Intermediate System DIIS bzw. das RLL/WLL-Telekommunikationsteilsystem RW-TTS basieren vorzugsweise auf ein **D**ECT/**G**AP-**S**ystem DGS wie es beispielsweise in FIGUR 1 dargestellt ist.

Das DECT/ISDN Intermediate System DIIS bzw. das RLL/WLL-Telekommunikationsteilsystem RW-TTS kann alternativ auch auf einem GSM-System basieren (Groupe **S**péciale **M**obile oder Global **S**ystem for **M**obile Communication; vgl. Informatik Spektrum 14 (1991) Juni, Nr. 3, Berlin, DE; A.Mann: "Der GSM-Standard - Grundlage für digitale europäische Mobilfunknetze", Seiten 137 bis 152). Stattdessen ist es im Rahmen eines hybriden Telekommunikationssystems auch möglich, daß das ISDN-Telekommunikationsteilsystem I-TTS als GSM-System oder als PSTN-System (**P**ublic **S**witched **T**elecommunications Network) ausgebildet ist.

Darüber hinaus kommen als weitere Möglichkeiten für die Realisierung des DECT/ISDN Intermediate System DIIS bzw. des RLL/WLL-Telekommunikationsteilsystems RW-TTS oder des ISDN-Telekommunikationsteilsystems I-TTS die eingangs erwähnten Systeme sowie zukünftige Systeme in Frage, die auf die bekannten Vielfachzugriffsmethoden FDMA, TDMA, CDMA (**F**requency **D**ivision **M**ultiple **A**ccess, **T**ime **D**ivision **M**ultiple **A**ccess, **C**ode **D**ivision **M**ultiple **A**ccess) und hieraus gebildete hybride Vielfachzugriffsmethoden basieren.

Die Verwendung von Funkkanälen (z. B. DECT-Kanälen) in klassischen leitungsgebundenen Telekommunikationssystemen, wie dem ISDN, (RLL/WLL-Szenario) gewinnt zunehmend an Bedeutung, insbesondere vor dem Hintergrund zukünftiger alternativer Netzbetreiber ohne eigenes komplettes Drahtnetz.

So sollen z. B. bei dem RLL/WLL-Telekommunikationsteilsystem RW-TTS die drahtlose Anschlußtechnik RLL/WLL (**R**adio in the **L**ocal **L**oop/**W**ireless in the **L**ocal **L**oop) z.B. unter der Einbindung des DECT-Systems DS dem ISDN-Teilnehmer ISDN-Dienste an Standard-ISDN-Schnittstellen verfügbar gemacht werden (vgl. FIGUR 4).

In dem "ISDN ↔ DECT"-Telekommunikationssystem ID-TS nach FIGUR 4 ist zum einen ein erster Telekommunikationsteilnehmer (Benutzer) TCU1 (**T**ele-**C**ommunication User) mit seinem Endgerät TE (**T**erminal **E**ndpoint; **T**erminal **E**quipment) z.B. über eine standardisierte S-Schnittstelle (S-BUS), das als lokale Nachrichtenübertragungsschleife ausgebildete - vorzugsweise DECTspezifische und in dem RLL/WLL-Telekommunikationsteilsystem RW-TTS enthaltene - DECT/ISDN Intermediate System DIIS, eine weitere standardisierte S-Schnittstelle (S-BUS), einen Netzabschluß NT (**N**etwork **T**ermination) und eine standardisierte U-Schnittstelle des ISDN-Telekommunikationsteilsystems I-TTS und zum anderen ein zweiter Telekommunikationsteilnehmer TCU2 als Endnutzer des DECT/ISDN Intermediate Systems DIIS in die ISDN-Welt mit den darin verfügbaren Diensten eingebunden.

Das DECT/ISDN Intermediate System DIIS besteht im wesentlichen aus zwei Telekommunikationsschnittstellen, einer ersten Telekommunikationsschnittstelle DIFS (**D**ECT **I**ntermediate **F**ixed **S**ystem) und einer zweiten Telekommunikationsschnittstelle DIPS (DECT Intermediate **P**ortable **S**ystem), die drahtlos, z.B. über eine DECT-Luftschnittstelle, miteinander verbunden sind. Wegen der quasi-ortsgebundenen ersten Telekommunikationsschnittstelle DIFS bildet das DECT/ISDN Intermediate System DIIS die vorstehend in diesem Zusammenhang definierte lokale Nachrichtenübertragungsschleife. Die erste Telekommunikationsschnittstelle DIFS enthält ein Funk-Festteil RFP (Radio **F**ixed **P**art), eine Anpassungseinheit IWU1 (**I**nter**W**orking Unit) und eine Schnittstellenschaltung INC1 (**IN**terface Circuitry) zur S-Schnittstelle. Die zweite Telekommunikationsschnittstelle DIPS enthält ein Funk-Mobilteil RPP (**R**adio **P**ortable **P**art) und eine Anpassungseinheit IWU2 (**I**nter**W**orking Unit) und gegebenenfalls eine Schnittstellenschaltung INC2 (**IN**terface **C**ircuitry) zur S-Schnittstelle. Das Funk-Festteil RFP und das Funk-Mobilteil RPP bilden dabei das bekannte DECT/GAP-System DGS.

Die FIGUR 4 zeigt - wie bereits erwähnt - zum einen (1. Möglichkeit) als typisches RLL/WLL-Szenario wie das DECT/ISDN Intermediate System DIIS im Rahmen des RLL/WLL-Telekommunikationsteilsystem RW-TTS in das ISDN-Telekommunikationsteilsystem 1-TTS als lokale Nachrichtenübertragungsschleife eingebunden ist und zum anderen (2. Möglichkeit) wie das DECT/ISDN Intermediate System DIIS unter CAP-Gesichtspunkten (Cordless Terminal Mobility **A**ccess **P**rofile) nur netzseitig mit dem ISDN-Telekommunikationsteilsystem I-TTS verbunden ist. Bei der 2. Möglichkeit ist die Schnittstellenschaltung INC2 der zweiten Telekommunikationsschnittstelle DIPS zur S-Schnittstelle nicht aktiv oder überhaupt nicht vorhanden. Um diesen Sachverhalt insgesamt grafisch darzustellen und zu untermauern, ist die Schnittstellenschaltung INC2 der zweiten Telekommunikationsschnittstelle DIPS gestrichelt gezeichnet. Während die zweite Telekommunikationsschnittstelle DIPS bei der 1. Möglichkeit beispielsweise nicht mobilteilspezifisch, d.h. mit Bedienoberfläche, ausgebildet ist, ist die zweite Telekommunikationsschnittstelle DIPS bei der 2. Möglichkeit als typisches Mobilteil mit einer Bedienoberfläche ausgebildet.

FIGUR 5 zeigt in Anlehnung an die Druckschrift "Nachrichtentechnik Elektronik 42 (1992) Jan./Feb., Nr. 1, Berlin, DE; U. Pilger: "Struktur des DECT-Standards", Seiten 23 bis 29 in Verbindung mit ETS 300 175-1....9, Oktober 1992" die TDMA-Struktur des DECT/GAP-Systems DGS. Das DECT/GAP-System ist ein bezüglich der Vielfachzugriffsverfahren hybrides System, bei dem nach dem FDMA-Prinzip auf zehn Frequenzen im Frequenzband zwischen 1,88 und 1,9 GHz Funknachrichten nach dem TDMA-Prinzip gemäß FIGUR 5 in einer vorgegebenen zeitlichen Abfolge von der Basisstation BS zum Mobilteil MT und vom Mobilteil MT zur Basisstation BS (Time Division Duplex-Betrieb) gesendet werden können. Die zeitliche Abfolge wird dabei von einem Multi-Zeitrahmen MZR bestimmt, der alle 160 ms auftritt und der 16 Zeitrahmen ZR mit jeweils einer Zeitdauer von 10 ms aufweist. In diesen Zeitrahmen ZR werden nach Basisstation BS und Mobilteil MT getrennt Informationen übertragen, die einen im DECT-Standard definierten C-, M-, N-, P-, Q-Kanal betreffen. Werden in einem Zeitrahmen ZR Informationen für mehrere dieser Kanäle übertragen, so erfolgt die Übertragung nach einer Prioritätenliste mit M > C > N und P > N. Jeder der 16 Zeitrahmen ZR des Multi-Zeitrahmens MZR unterteilt sich wiederum in 24 Zeitschlitze ZS mit jeweils einer Zeitdauer von 417 µs, von denen 12 Zeitschlitze ZS (Zeitschlitze 0 ... 11) für die Übertragungsrichtung "Basisstation BS → Mobilteil MT" und weitere 12 Zeitschlitze ZS (Zeitschlitze 12
... 23) für die Übertragungsrichtung "Mobilteil MT → Basisstation BS" bestimmt sind. In jedem dieser Zeitschlitze ZS werden nach dem DECT-Standard Informationen mit einer Bitlänge von 480 Bit übertragen. Von diesen 480 Bit werden 32 Bit als Synchronisationsinformation in einem SYNC-Feld und 388 Bit als Nutzinformation in einem D-Feld übertragen. Die restlichen 60 Bit werden als Zusatzinformationen in einem Z-Feld und als Schutzinformationen in einem Feld "Guard-Time" übertragen. Die als Nutzinformationen übertragenen 388 Bit des D-Feldes unterteilen sich wiederum in ein 64 Bit langes A-Feld, ein 320 Bit langes B-Feld und ein 4 Bit langes "X-CRC"-Wort. Das 64 Bit lange A-Feld setzt sich aus einem 8 Bit langen Datenkopf (Header), einem 40 Bit langen Datensatz mit Daten für die C-,Q-,M-,N-,P-Kanäle und einem 16 Bit langen "A-CRC"-Wort zusammen.

Für den Aufbau von Telekommunikationsverbindungen zwischen der/den Basisstation/en BS und den Mobilteilen MT in den DECT-Systemen gemäß den FIGUREN 1 bis 5 ist nach dem DECT-Standard beispielsweise die nachfolgend beschriebene Prozedur vorgesehen.

Die Basisstation BS (Radio Fixed Part RFP) gemäß den FIGUREN 1 bis 5 sendet über die DECT-Luftschnittstelle in regelmäßigen Zeitabständen auf Simplex-Übertragungswegen, den sogenannten Dummy-Bearer, Broadcast-Informationen, die von dem Mobilteil MT (Radio Portable Part RPP) gemäß den FIGUREN 1 bis 5 empfangen werden und diesem für die Synchronisation und den Verbindungsaufbau mit der Basisstation dienen. Die Broadcast-Informationen müssen nicht unbedingt auf einen Dummy-Übertragungsweg (Dummy Bearer) gesendet werden.

Es ist auch möglich, daß kein Dummy-Übertragungsweg vorhanden ist, weil die Basisstation bereits mindestens eine Telekommunikationsverbindung, einen sogenannten Traffic-Übertragungsweg (Traffic-Bearer), zu einem anderen Mobilteil unterhält und auf dem es dann die nötigen Broadcast-Informationen sendet. In diesem Fall kann das Mobilteil MT, RPP, das eine Telekommunikationsverbindung zu der Basisstation BS, RFP haben möchte, die Broadcast-Informationen - wie beim Übertragen der Broadcast-Informationen auf dem Dummy-Übertragungsweg - empfangen.

Die Broadcast-Informationen enthalten - gemäß der ETSI-Publikation ETS 300175-3, Oktober 1992, Kapitel 9.1.1.1 - Informationen über Zugriffsrechte, Systeminformationen und Paging-Informationen.

In einem universellen Mobil-Telekommunikationssystem wird DECT - wie bereits erwähnt - vorrangig als eine "Netzzugriffstechnologie" für mobile Kommunikationsdienste *(vgl. Vortrag von* A. Elberse, M. Barry, G. Fleming zum Thema: "DECT Data Services - DECT in Fixed and Mobile Networks", 17. l18. Juni 1996, Hotel Sofitel, Paris; Seiten 1 bis 12 *und Zusammenfassung)* und nicht als Netz verstanden. Nichtdestotrotz kann jedermann aufgrund der vorstehenden Diskussion von diversen Telekommunikationssystemen durch die Anschaffung eines auf die jeweiligen Bedürfnisse zugeschnittenen und somit unterschiedlich ausgeprägten DECT-Systems zu seinem eigenen Netzbetreiber werden.

Um dabei auf eine Netz-Koordination verzichten zu können, ist gemäß dem DECT-Standard das Dynamic Channel Allocation-Verfahren (DCA-Verfahren) vorgesehen. Wenn z. B. eine DECT-Verbindung aufgebaut wird, wird diejenige Frequenz und dasjenige Zeitfenster mit der geringsten Interferenz gesucht. Die Höhe (Stärke) der Interferenz hängt vorrangig davon ab, ob
(a) bereits an einer anderen Basisstation ein Gespräch geführt wird oder
(b) ein Mobilteil durch Bewegung in Sichtkontakt mit einer zuvor abgeschatteten Basisstation kommt.

Eine sich hieraus ergebende Erhöhung der Interferenz kann mit dem DECT-Schnurlostelefonsystem zugrundegelegten TDMA-Übertragungsverfahren begegnet werden. Nach dem TDMA-Verfahren wird lediglich ein Zeitschlitz für die eigentliche Übertragung gebraucht; die übrigen elf Zeitschlitze können für Messungen verwendet werden. Dadurch kann ein alternatives Frequenz/Zeitschlitzpaar ermittelt werden, auf das die Verbindung umgeschaltet werden kann. Dies geschieht im Rahmen einer adaptiven Kanalzuweisung gemäß dem DECT-Standard (vgl. Nachrichtentechnik Elektronik 42 (Jan./Feb. 1992), No.1, Berlin; U. Pilger: "Struktur des DECT-Standards"; Seite 28 Punkt 3.2.6) durch ein "Connection-Handover" (Intra-Cell Handover).

Neben diesem "Intra-Cell Handover" ist noch das "Inter-Cell Handover" bzw. das seamless Handover zu nennen, das ebenfalls im Rahmen der DECT-spezifischen adaptiven Kanalzuweisung möglich ist.

Um nun insbesondere das bei zellularen drahtlosen Telekommunikationssysteme regelmäßig auftretende "Inter-Cell Handover"-Problem in den Griff zu bekommen, muß das für solche zellularen Funk-Telekommunikationssysteme vorgesehene mobile Funkempfangsgerät (Mobilteil) zu jedem Zeitpunkt einer aktiven Telekommunikationsverbindung zu einem (quasi)stationären Funksendegerät (Basisstation) in der Lage sein, bedingt durch einen Zellenwechsel innerhalb des zellularen Funksystems die Basisstation zu wechseln (Aufbau einer Telekommunikationsverbindung zu einer anderen Basisstation) und dabei die bereits bestehende aktive Telekommunikationsverbindung unterbrechungsfrei (seamless) an die andere Basisstation weiterzureichen (seamless Handover).

Der DECT-Standard sieht hierfür gemäß der Druckschrift Nachrichtentechnik Elektronik 42 (Jan./Feb. 1992), No.1, Berlin; U. Pilger: "Struktur des DECT-Standards"; Seite 28 Punkt 3.2.6 vor, daß das Mobilteil selbständig bei einer Verschlechterung der Übertragungsqualität der bestehenden Telekommunikationsverbindung aufgrund von die Übertragungsqualität angebenden Indikatoren (z.B. Signalfeldstärke, CRC-Werte etc.) parallel zu der bestehenden Verbindung eine zweite Telekommunikationsverbindung aufbaut. Bei dieser "Inter-Cell Handover"-Prozedur wird die Tatsache, daß DECT-Mobilteile im Rahmen der dynamischen, dezentralisierten Kanalzuweisung (DCA-Verfahren) ständig über den Status der in der momentanen Umgebung verfügbaren Kanäle informiert sind, derart ausgenutzt, daß die zweite Verbindung aufgrund des Eintrages in eine Kanalliste aufgebaut wird.

Ein unterbrechungsfreies Handover ist mit der vorstehenden Prozedur nur dann möglich, wenn das Mobilteil sich in einem zellularen Funksystem mit synchronisierten Basisstationen befindet. In einem solchen synchronen zellularen Funksystem kann das Mobilteil dann zusätzlich zu der bereits bestehenden Telekommunikationsverbindung zu einer Basisstation (Ursprungs-Basisstation) mindestens eine weitere Verbindung zu einer anderen Basisstation in einer anderen Funkzelle aufbauen, ohne dabei die Synchronität zur Ursprungs-Basisstation zu verlieren. Ein solches synchrones zellulares Funksystem kann aber nur mit erheblichen Systemaufwand (Kabel- oder Funksynchronisation) realisiert werden.

Überall dort, wo der Aufwand für die Realisierung eines synchronen zellularen Funksystems z.B. aus Kostengründen nicht gerechtfertigt ist, wird man auf eine Synchronisation verzichten und asynchrone Verhältnisse in Kauf nehmen.

FIGUR 6 zeigt ein zumindest teilweise asynchrones drahtloses, vorzugsweise als DECT-Netz ausgebildetes Telekommunikationsnetz TKN, das eine Vielzahl von drahtlosen, vorzugsweise (z.B. gemäß der FIGUREN 1 bis 5) als DECT-Systeme ausgebildeten Telekommunikationssysteme TKS1...TKSn enthält. Jedes Telekommunikationssystem TKS1...TKSn weist eine Vielzahl von in Funkzellen FZ angeordneten Basisstationen BS, RFP, DIFS auf, die durch drahtlose Telekommunikation (z.B. nach dem DECT-Luftschnittstellenprotokoll) mit in den Telekommunikationssystemen TKS1...TKSn und im Telekommunikationsnetz TKN sich standortunabhängig bewegenden bzw. aufhaltenden Mobilteilen MT, RPP, DIPS (roaming radio mobile part; "roaming" Mobilteil) verbindbar sind. In dem Telekommunikationssystem TKS1...TKSn sind die Funkzellen FZ zu einem sogenannten Funk-Cluster, zusammengefaßt, das z.B. vorzugsweise aus untereinander synchronisierten Basisstationen BS, RFP, DIFS besteht. Die Funkzellen FZ sind, um einerseits eine 100 prozentige Funkabdeckung grafisch darstellen zu können und andererseits eine übersichtige Darstellung zu erhalten, sechseckig (wabenförmig) dargestellt. Stellvertretend für alle Funkzellen FZ ist für Funkzellen FZ', jeweils der sich unter idealen geographischen und physikalischen Bedingungen ergebende kreisförmige Funkraum einer Basisstation dargestellt. Bei dieser Darstellung ergeben sich jeweils überlappende bzw. überschneidende Funkbereiche (Überlappungs- bzw. Überschneidungsbereiche). In diesen Überlappungs- bzw. Überschneidungsbereichen können die "roaming" Mobilteile je nach Anzahl der sich überlappenden bzw. überschneidenden Funkbereiche Funkverbindungen zu mehreren Basisstationen aufbauen und ggf. unterhalten.

Die Besonderheit des dargestellten Telekommunikationsnetzes TKN liegt nun darin, daß zwar die Basisstationen BS, RFP, DIFS in den einzelnen Telekommunikationssystemen TKS1...TKSn untereinander synchronisiert sind, daß aber die einzelnen Telekommunikationssysteme TKS1...TKSn entweder überhaupt nicht oder nur teilweise synchronisiert sind (zumindest teilweise asynchrones Telekommunikationsnetz TKN). Im dargestellten Fall sind zur Darstellung dieses Sachverhaltes erste Telekommunikationsysteme TKS1...TKS7 nicht synchronisiert, also zueinander asynchron, während zweite Telekommunikationssysteme TKSn-2, TKSn-1, TKSn zueinander synchron sind. Demzufolge gibt es dem vorliegenden Telekommunikationsnetz TKN in den Randbereichen der ersten Telekommunikationsysteme TKS1..TKS7 Basisstationen, bei denen jeweils von den benachbarten Basisstationen zumindest eine benachbarte Basisstation nicht synchron, also asynchron, zu der betreffenden Basisstation ist.

Die derzeitige Situation bezüglich des "Roaming" der Mobilteile MT, RPP, DIPS in solchen zumindest teilweise asynchronen Telekommunikationsnetzen TKN stellt sich wie folgt dar:

Derzeit auf dem Markt erhältliche Mobilteile (z.B. das Siemens-Mobilteil "Gigaset 1000C oder 1000S" oder andere DECT/GAP-Endgeräte) ordnen sich z.B. im IDLE LOCKED-Modus (vgl. ETSI-Publikation ETS 300175-3, Oktober 1992, Kap. 4.3.1) unter allen möglichen Basisstationen, die an einem Ort empfangen werden können, der Basisstation zu, welche z.B. mit der höchsten Feldstärke empfangen wird. Als Entscheidungskriterium für die Zuordnung zu einer Basisstation bieten sich alternativ auch die übertragenen CRC-Werte bzw. eine Kombination aus beiden Möglichkeiten an. Hat sich das Mobilteil einer Basisstation zugeordnet, dann ordnet sich das Mobilteil einer anderen Basisstation zu, wenn die Empfangsqualität der zugeordneten Basisstation schlechter wird. Beim Zuordnen zu einer neuen Basisstation werden zwei Fälle unterschieden:

1. Die Empfangsqualität der aktuellen Basisstation verschlechtert sich so stark, daß das Mobilteil den Funkkontakt zur zugeordneten Basisstation verliert und aufgrund der schlechten Empfangsqualitat keine Synchronisation zur Basisstation mehr aufrechterhalten kann. In diesem Fall geht das Mobilteil in einen sogenannten "Free Run Scan Mode" und versucht unter allen zu empfangenden Basisstationen sich auf die am besten zu empfangene Basisstation zu synchronisieren.

2. Die Qualität der zugeordneten Basisstation wird schlechter, aber der Funkkontakt zur bisher zugeordneten Basisstation bricht nicht ab, d.h. das Mobilteil empfängt die Signale der Basisstation mit schlechter Qualität, ist aber noch zur zugeordneten Basisstation synchronisiert. In diesem Falle sucht das Mobilteil nach benachbarten Basisstationen, die bit-, zeitschlitz- und/oder zeitrahmensynchron zur zugeordneten Basisstation sind und vom Mobilteil mit besserer Qualität empfangen werden können. Falls das Mobilteil hinsichtlich der angegebenen Synchronitätskriterien keine bessere Basisstation findet, bleibt das Mobilteil der bisherigen Basisstation zugeordnet, auch wenn die Empfangsqualität dieser zugeordneten Basisstation schlecht wird.

Der Nachteil im Fall 2 besteht darin, daß, falls es eine benachbarte, hinsichtlich der angegebenen Synchronitätskriterien asynchrone Basisstation gibt, die das Mobilteil mit besserer Qualität empfangen würde, das Mobilteil diese asynchrone Basisstation nicht finden wird, da es nur synchrone Basisstationen orten kann, solange der Funkkontakt zur zugeordneten besteht und die Synchronisation nicht verloren geht.

Aus der WO97/15160 ist ein Telekommunikationssystem mit Basisstationen und zumindest einem Mobilteil bekannt, bei dem die Funkumgebung nach synchronen oder asynchronen Funkverbindungen gescannt wird. Ein Handover zu einer synchronen Verbindung erfolgt nahtlos und bei einem Handover in einer asynchronen Funkumgebung wird eine Verbindung einer Mobilstation zu einer ersten Basisstation an eine zweite Basisstation übergeben, indem die Übertragung der Mobilstation über eine erste Funkverbindung unterbrochen wird, während die erste Basisstation die Übertragung über die erste Funkverbindung aufrechterhält, sowie anschließend eine zweite Funkverbindung von der Mobilstation zu der zweiten Basisstation aufgebaut und die Verbindung über diese Funkverbindung fortgesetzt wird, nachdem die erste Funkverbindung von der ersten Basisstation freigegeben worden ist.

Aus der US 5,448,569 ist ein Verfahren bzw. Anordnung in einem drahtlosen Kommunikationsnetz mit Mobilstationen und Basisstationen bekannt, bei denen zum einen die Mobilstation in der Lage ist die Qualität der Verbindung, die sie zu einer ersten Basisstation unterhält, zu erfassen und zum anderen Schritte bzw. Mittel bereitstellt werden mit denen, wenn die erfaßte Qualität einen vorbestimmten Wert unterschreitet, diese Verbindung an eine zweite Basisstation übergeleitet wird.

Die der Erfindung zugrundeliegende Aufgabe besteht darin, das Roaming von Mobilteilen in zumindest teilweise asynchronen drahtlosen Telekommunikationsnetzen qualitativ zu verbessern.

Diese Aufgabe wird ausgehend von den im Oberbegriff des Patentanspruches 1 definierten Telekommunikationssystemen durch die im Kennzeichen des Patentanspruches 1 angegebenen Merkmale gelöst.

Diese Aufgabe wird außerdem auch ausgehend von den im Oberbegriff des Patentanspruches 20 definierten Telekommunikationssystemen durch die im Kennzeichen des Patentanspruches 20 angegebenen Merkmale gelöst.

Die der Erfindung (Anspruch 1) zugrundeliegende Idee besteht darin, das "Roaming" von Mobilteilen in zumindest teilweise asynchronen drahtlosen Telekommunikationsnetzen mit Telekommunikationsystemen mit mehreren in Funkzellen angeordneten Basisstationen der eingangs umrissenen Art qualitativ zu verbessern, senden erste Basisstationen oder ein Teil dieser ersten Basisstationen, zu denen jeweils mindestens eine asynchrone zweite Basisstation benachbart ist, an mit durch Telekommunikation mit den ersten Basisstationen verbindbare erste Mobilteile Informationen, die angeben, daß die die Informationen sendende jeweilige erste Basisstation von mindestens einer zweiten Basisstation umgeben wird.

Die gesendete Informationen sind z.B. - bei DECT-Basisstationen - auf Broadcast-Kanäle gesendete RFP-Status-Signale (vgl. ETSI-Publikation ETS-300175-3, Oktober 1992, Kap. 7.2.4.3.9.), die entsprechende Signalinformationen enthalten.

Nach Anspruch 9 ist es vorteilhaft, wenn die ersten Mobilteile bei einer gewissen Verschlechterung der Empfangsqualität nach Erhalt der Informationen kurzzeitig (für eine vorgegebene kurze Zeitdauer) den Funkkontakt bzw. die Synchronisation verlassen, um auch asynchrone Basisstationen zu suchen und damit die Qualität des Funkkontakte zu verbessern. Auf diese Weise haben die ersten Mobilteile Kenntnis davon, daß sich neben den synchronen ersten Basisstationen auch mindestens eine asynchrone zweite Basisstation in der Nachbarschaft befindet oder auch nur asynchrone zweite Basisstationen befinden.

Wird die Verbindung zur zugeordneten ersten Basisstation schlechter und hat das erste Mobilteil das RFP-Status-Signal "Asynchrone zweite Basisstation vorhanden" detektiert, dann kann im ersten Mobilteil gemäß der Ansprüche 10 bis 20 folgender Algorithmus in Anlehnung an die WO 96/38991 (vgl. z.B. Figur 9 iVm Patentansprüche 1 bis 3) ablaufen:

Findet das erste Mobilteil keine bessere synchrone erste Basisstation und wird die Verbindung für eine gewisse Zeit schlechter, z. B., wenn der empfangene Pegel für ein gewisses Zeitintervall unterhalb einer vordefinierten Schwelle liegt, so soll das Mobilteil in den "Free Run Scan Mode" gehen und die benachbarte/n asynchrone/n zweite/n Basisstation/en bzw. die stärkste Basisstation suchen. Ist die Suche nach anderen Basisstationen nicht erfolgreich, so kann das Mobilteil zur alten Basisstation zurückgehen, da sie immer noch die am besten zu empfangende Basisstation darstellt. Die Suche nach einer asynchronen zweiten Basisstation kann nach Ablauf eines ersten Zeitzählers (Timer) von z. B. 5 Minuten wieder angestoßen werden.

Hat das Mobilteil eine asynchrone zweite Basisstation gefunden, so sollte sie erst nach Ablauf eines zweiten Zeitzählers (Timer) von z.B. 5 Sekunden wieder weitere asynchrone zweite Basisstationen suchen, obwohl der Funkkontakt noch besteht und falls die Qualität der neu zugeordneten Basisstation abnimmt. Dieser zweite Zeitzähler soll verhindern, daß das Mobilteil an den Grenzen der Funkversorgungsbereiche von asynchronen Basisstationen hin und herwechselt, was eine erhöhte Signalisierungslast für ein an die Basisstationen angekoppeltes Netz bedeuten kann.

Besteht dagegen das Netz nur aus asynchronen zweiten Basisstationen, wie z.B. mehrere "residential" ISDN-Basisstationen an einem Sₒ-Bus [vgl. WO 96/38990 (Figuren 5 und 6 mit der jeweils dazugehörigen Beschreibung)], dann kann das Mobilteil so konfiguriert werden - z.B. durch ein internes Menü (Menü-Punkt: Mehrzellenkonfiguration) - daß, falls die Verbindung schlechter wird, ohne den Funkkontakt bzw. die Synchronisation zur zugeordneten Base Station zu verlieren, das Mobilteil immer in den sogenannten "Free Run Scan Mode" gehen soll, um die benachbarten asynchronen Basisstationen zu lokalisieren und sich zuzuordnen.

Weitere vorteilhafte Weiterbildungen der Erfindung sind in den übrigen Unteransprüchen angegeben.

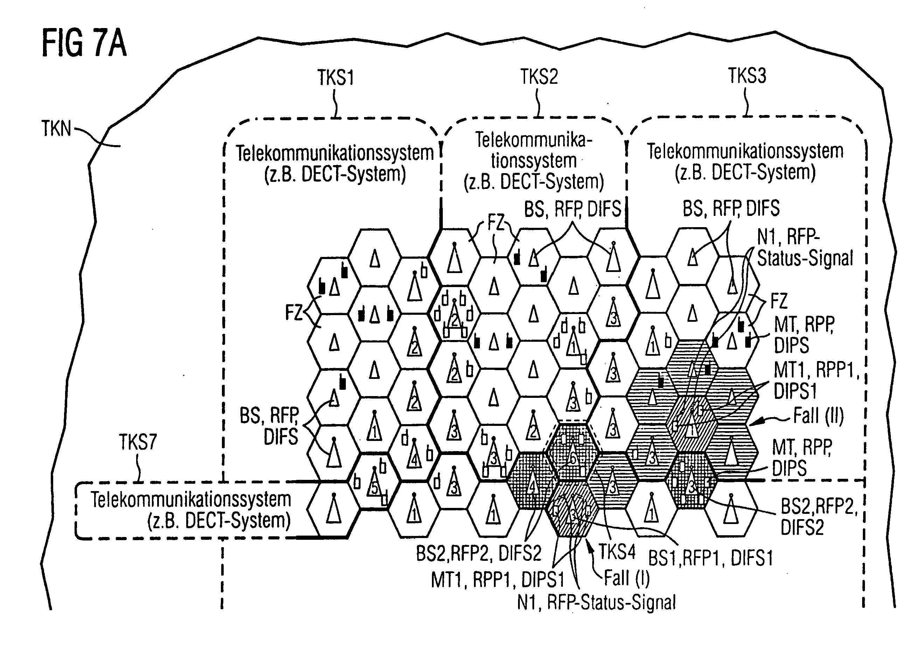

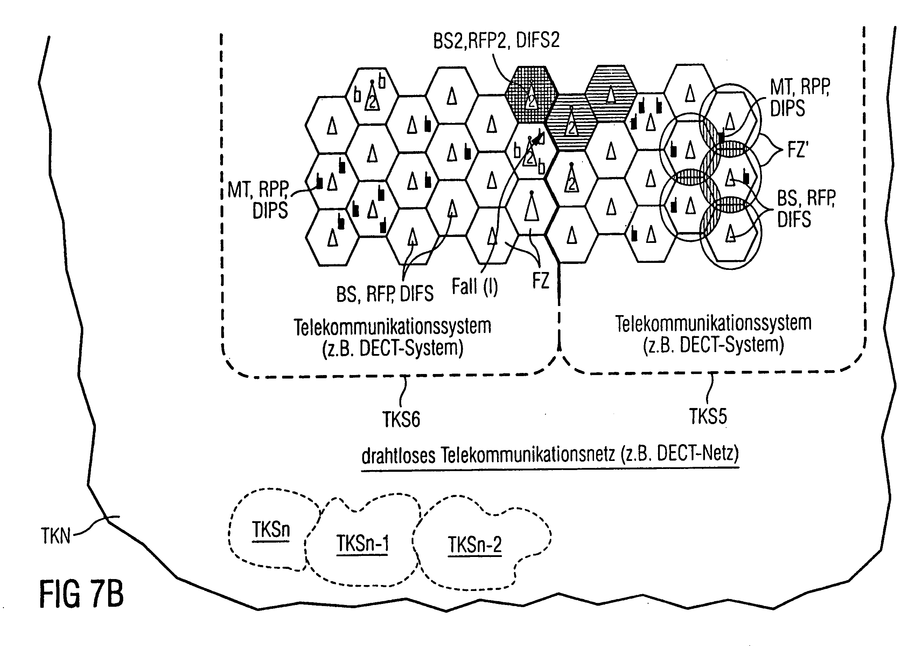

Ein Ausführungsbeispiel der Erfindung wird anhand der FIGUR 7 erläutert.

FIGUR 7 zeigt ausgehend von FIGUR 6 das zumindest teilweise asynchrone drahtlose, vorzugsweise als DECT-Netz ausgebildete Telekommunikationsnetz TKN, das insbesondere die Vielzahl der drahtlosen, vorzugsweise (z.B. gemäß der FIGUREN 1 bis 5) als DECT-Systeme ausgebildeten ersten Telekommunikationsysteme TKS1...TKS7 enthält, die nicht synchronisiert sind, also zueinander asynchron sind. In den ersten Telekommunikationsystemen TKS1..TKS7 gibt es nun in den Randbereichen - stellvertretend für die Vielzahl von gleichgelagerten Fällen in dem Telekommunikationsnetz TKN an zwei Fällen, Fall (I) und Fall (II), dargestellt - erste Basisstationen BS1, RFP1, DIFS1 (aufwärtsdiagonal schraffierte Funkzellen FZ), bei denen jeweils von benachbarten Basisstationen (waagerecht schraffierte Funkzellen FZ) zumindest eine benachbarte zweite Basisstation BS2, RFP2, DIFS2 (waagerecht und senkrecht schraffierte Funkzellen FZ) nicht synchron, also asynchron, zu den ersten Basisstationen BS1, RFP1, DIFS1 ist und die synchron zu ersten Mobilteilen MT1, RPP1, DIPS1 sind bzw. - mit anderen Worten ganz allgemein formuliert - die mit den ersten Mobilteilen MT1, RPP1, DIPS1 durch das übertragen von Nachrichten (z.B. DECT-Nachrichten gemäß dem DECT-Luftschnittstellenprotokoll; vgl. ETSI-Publikation ETS 300175-1...9, Oktober 1992) bzw. Telekommunikation verbunden sind. Synchron bedeutet dabei beispielsweise, daß die ersten Mobilteilen MT1, RPP1, DIPS1 sich in einem IDLE LOCKED-Modus und/oder in einem ACTIVE LOCKED-Modus nach dem DECT-Standard (vgl. ETSI-Publikation ETS 300175-3, Oktober 1992, Kap. 4.3.1) befinden können. In dem verwendeten "Dreieck-Symbol" als Kennzeichnung der ersten Basisstationen BS1, RFP1, DIFS1 ist durch eine natürliche Zahl angegeben, wieviele der zweiten Basisstationen BS2, RFP2, DIFS2 zu den ersten Basisstationen BS1, RFP1, DIFS1 benachbart sind. Im Fall (I) sind es "3" zweite Basisstationen BS2, RFP2, DIFS2, während es im Fall (II) "1" zweite Basisstation BS2, RFP2, DIFS2 ist. Diese jeweiligen Informationen sind als jeweils erste Informationen "mindestens eine asynchrone Basisstation vorhanden" Inhalt von ersten Nachrichten, die von den ersten Basisstationen BS1, RFP1, DIFS1 zu den ersten Mobilteilen MT1, RPP1, DIPS1 - bei DECT-Basisstationen - durch auf Broadcast-Kanäle gesendete RFP-Status-Signale (vgl. ETSI-Publikation ETS-300175-3, Oktober 1992, Kap. 7.2.4.3.9.) übertragen werden.

Das Senden der ersten Nachrichten N1 (RFP-Status-Signale mit den ersten Informationen "mindestens eine asynchrone Basisstation vorhanden") kann vorteilhafter Weise gesteuert durch das Telekommunikationsnetz TKN und/oder durch das jeweilige Telekommunikationssystem TKS1...TKS7 und/oder automatisch z.B. in regelmäßigen Zeitabständen erfolgen.

Auf diese Weise haben die ersten Mobilteile MT1, RPP1, DIPS1 Kenntnis davon, daß sich neben den synchronen ersten Basisstationen auch mindestens eine asynchrone zweite Basisstation BS2, RFP2, DIFS2 in der Nachbarschaft befindet oder auch nur asynchrone zweite Basisstationen BS2, RFP2, DIFS2 befinden.

Werden die Verbindungen zu den zugeordneten ersten Basisstationen BS1, RFP1, DIFS1 schlechter und haben die ersten Mobilteile MT1, RPP1, DIPS1 jeweils das RFP-Status-Signal "Asynchrone zweite Basisstation vorhanden" detektiert, dann kann in ersten Mobilteilen MT1, RPP1, DIPS1 beispielsweise in Anlehnung an die WO 96/38991 (vgl. z.B. Figur 9 iVm Patentansprüche 1 bis 3) folgender Algorithmus ablaufen:

Findet das erste Mobilteil keine bessere synchrone erste Basisstation und wird die Verbindung für eine gewisse Zeit schlechter, z. B., wenn der empfangene Pegel für ein gewisses Zeitintervall unterhalb einer vordefinierten Schwelle liegt, so soll das Mobilteil in den "Free Run Scan Mode" gehen und die benachbarte/n asynchrone/n zweite/n Basisstation/en bzw. die stärkste Basisstation suchen. Ist die Suche nach anderen Basisstationen nicht erfolgreich, so kann das Mobilteil zur alten Basisstation zurückgehen, da sie immer noch die am besten zu empfangende Basisstation darstellt. Die Suche nach einer asynchronen zweiten Basisstation kann nach Ablauf des ersten Zeitzählers ZZ1 (Timer) von z. B. 5 Minuten wieder angestoßen werden.

Hat das Mobilteil eine asynchrone zweite Basisstation gefunden, so sollte sie erst nach Ablauf des zweiten Zeitzählers ZZ2 (Timer) von z.B. 5 Sekunden wieder weitere asynchrone zweite Basisstationen suchen, obwohl der Funkkontakt noch besteht und falls die Qualität der neu zugeordneten Basisstation abnimmt. Dieser zweite Zeitzähler soll verhindern, daß das Mobilteil an den Grenzen der Funkversorgungsbereiche von asynchronen Basisstationen hin und herwechselt, was eine erhöhte Signalisierungslast für ein an die Basisstationen angekoppeltes Netz bedeuten kann.

Besteht dagegen das Netz nur aus asynchronen zweiten Basisstationen, wie z.B. mehrere "residential" ISDN-Basisstationen an einem Sₒ-Bus [vgl. WO 96/38990 (Figuren 5 und 6 mit der jeweils dazugehörigen Beschreibung)], dann kann das Mobilteil so konfiguriert werden - z.B. durch ein internes Menü (Menü-Punkt: Mehrzellenkonfiguration) - daß, falls die Verbindung schlechter wird, ohne den Funkkontakt bzw. die Synchronisation zur zugeordneten Base Station zu verlieren, das Mobilteil immer in den sogenannten "Free Run Scan Mode" gehen soll, um die benachbarten asynchronen Basisstationen zu lokalisieren und sich zuzuordnen.

## Patentansprüche

1. Telekommunikationssysteme für drahtlose, zumindest teilweise asynchrone Telekommunikationsnetze, insbesondere DECT-Systeme für zumindest teilweise asynchrone DECT-Netze, mit ersten Basisstationen (BS1, RFP1, DIFS1), die synchron zu ersten Mobilteilen (MT1, RPP1, DIPS1) sind und in deren Nachbarschaft jeweils mindestens eine zweite Basisstation (BS2, RFP2, DIFS2), die jeweils zu den ersten Basisstationen (BS1, RFP1, DIFS1) asynchron ist/sind, angeordnet ist, wobei die Basisstationen (BS1, RFP1, DIFS1, BS2, RFP2, DIFS2) und erste Mobilstationen (MT1, RPP1, DIPS1) durch das drahtlose Übertragen von Nachrichten verbindbar sind,
**dadurch gekennzeichnet, daß**
zumindest von einem Teil von ersten Basisstationen (BS1, RFP1, DIFS1) erste Nachrichten (N1) mit ersten Informationen zumindest temporär gesendet werden, wobei die Informationen angeben, daß die ersten Basisstationen (BS1, RFP1, DIFS1) jeweils von mindestens einer der zweiten Basistation (BS2, RFP2, DIFS2) umgeben sind.

2. Telekommunikationssysteme nach Anspruch 1, **dadurch**
**gekennzeichnet, daß**
die Synchronität zwischen den ersten Basisstationen (BS1, RFP1, DIFS1) und den ersten Mobilteilen (MT1, RPP1, DIPS1) im IDLE LOCKED-Modus der ersten Mobilteile (MT1, RPP1, DIPS1) besteht.

3. Telekommunikationssysteme nach Anspruch 1 oder 2, **dadurch gekennzeichnet, daß**
die Synchronität zwischen den ersten Basisstationen (BS1, RFP1, DIFS1) und den ersten Mobilteilen (MT1, RPP1, DIPS1) im ACTIVE LOCKED-Modus der ersten Mobilteile (MT1, RPP1, DIPS1) besteht.

4. Telekommunikationssysteme nach einem der Ansprüche 1 bis
3, **dadurch gekennzeichnet, daß**
die Telekommunikationssysteme (TKS1...TKS7) TDMA-basierende Telekommmunikationssysteme sind.

5. Telekommunikationssysteme nach Anspruch 4, **dadurch**
**gekennzeichnet, daß**
die ersten Basisstationen (BS1, RFP1, DIFS1) jeweils zu der/den zweiten Basisstation/en (BS2, RFP2, DIFS2) hinsichtlich der Bit-, Zeitschlitz- und/oder Zeitrahmensynchronität asynchron sind.

6. Telekommunikationssysteme nach einem der Ansprüche 1 bis
5, **dadurch gekennzeichnet, daß**
der Teil der ersten Basisstationen (BS1, RFP1, DIFS1) die ersten Nachrichten (N1) mit den ersten Informationen regelmäßig sendet.

7. Telekommunikationssysteme nach einem der Ansprüche 1 bis
6, **dadurch gekennzeichnet, daß**
der Teil der ersten Basisstationen (BS1, RFP1, DIFS1) die ersten Nachrichten (N1) mit den ersten Informationen automatisch sendet.

8. Telekommunikationssysteme nach einem der Ansprüche 1 bis
6, **dadurch gekennzeichnet, daß**
der Teil der ersten Basisstationen (BS1, RFP1, DIFS1) zum Senden der ersten Nachrichten (N1) mit den ersten Informationen netzseitig angestoßen wird.

9. Telekommunikationssysteme nach einem der Ansprüche 1 bis
8, **dadurch gekennzeichnet, daß**
die ersten Mobilteile (MT1, RPP1, DIPS1) nach Empfang der ersten Nachrichten in Abhängigkeit von mobilteilstandortspezifischen Empfangskriterien für eine vorgegebene Zeitdauer asynchron zu den ersten Basisstationen (BS1, RFP1, DIFS1) werden, um nach den zweiten Basisstationen (BS2, RFP2, DIFS2) zu suchen.

10. Telekommunikationssysteme nach Anspruch 4 und 9, **dadurch gekennzeichnet, daß**
die ersten Mobilteile (MT1, RPP1, DIPS1) jeweils zu den ersten Basisstationen (BS1, RFP1, DIFS1) hinsichtlich der Bit-, Zeitschlitz- und/oder Zeitrahmensynchronität asynchron sind.

11. Telekommunikationssysteme nach Anspruch 9, **dadurch**
**gekennzeichnet, daß**
die ersten Mobilteile (MT1, RPP1, DIPS1), nachdem sie nach den zweiten Basisstationen (BS2, RFP2, DIFS2) gesucht haben, die weitere Suche für eine vorgegebene Zeitspanne unterbrechen.

12. Telekommunikationssysteme nach Anspruch 11, **dadurch**
**gekennzeichnet, daß**
die ersten Mobilteile (MT1, RPP1, DIPS1) zum Erfassen der Zeitspanne Zeitzähler (ZZ) aufweisen.

13. Telekommunikationssysteme nach Anspruch 12, **dadurch**
**gekennzeichnet, daß**
die ersten Basistationen (BS1, RFP1, DIFS1) durch die drahtlose Übertragung der Nachrichten die Zeitzähler (ZZ) der ersten Mobilteile (MT1, RPP1, DIPS1) mit der vorgegebenen Zeitspanne als Startwert laden.

14. Telekommunikationssysteme nach Anspruch 13, **dadurch**
**gekennzeichnet, daß**
die ersten Basisstationen (BS1, RFP1, DIFS1) Speicher (SP) aufweisen, in denen jeweils die Zeitspanne gespeichert sind.

15. Telekommunikationssysteme nach Anspruch 13 oder 14, **dadurch gekennzeichnet, daß**
die Zeitspanne den ersten Basisstationen (BS1, RFP1, DIFS1) netzseitig zuführbar ist.

16. Telekommunikationssysteme nach einem der Ansprüche 9 bis 15 und nach Anspruch 4, **dadurch gekennzeichnet, daß** die Zeitspanne ein Vielfaches des Zeitschlitzes oder Zeitrahmens ist.

17. Telekommunikationssysteme nach einem der Ansprüche 9 bis
16, **dadurch gekennzeichnet, daß**
die ersten Mobilteile (MT1, RPP1, DIPS1) bei erfolglosen Versuchen, die zweiten Basisstationen (BS2, RFP2, DIFS2) zu suchen, die Suchvorgänge in regelmäßigen Zeitabständen wiederholen.

18. Telekommunikationssysteme nach einem der Ansprüche 9 bis
17, **dadurch gekennzeichnet, daß**
die mobilteilstandortspezifischen Empfangskriterien das Unterschreiten von mobilteilstandortspezifischen Empfangsfeldstärkeschwellwerten sind.

19. Telekommunikationssysteme nach Anspruch 18, **dadurch**
**gekennzeichnet, daß**
die mobilteilstandortspezifischen Empfangsfeldstärkeschwellwerte und Schwellwerte für die Initiierung von Inter Cell-Handover gleich groß sind.

## Claims

1. Telecommunication systems for wireless, at least partly asynchronous telecommunication networks, especially DECT systems for at least partly asynchronous DECT networks, with first base stations (BS1, RFP1, DIFS1) that are synchronous to first mobile units (MT1, RPP1, DIPS1) and arranged in the vicinity of which in each case is at least one second base station (BS2, RFP2, DIFS2) which is/are asynchronous to the first base stations (BS1, RFP1, DIFS1) with the base stations (BS1, RFP1, DIFS1, BS2, RFP2, DIFS2) and first mobile stations (MT1, RPP1, DIPS1) being able to be connected by the wireless transmission of messages.
**characterized in that**
first messages (N1) with first information are sent at least temporarily by at least a part of the first base stations (BS1, RFP1, DIFS1), with the information specifying that the first base stations (BS1, RFP1, DIFS1) are surrounded by at least one of the second base stations (BS2, RFP2, DIFS2).

2. Telecommunication systems according to claim 1,
**characterized in that**
the synchronicity between the first base stations (BS1, RFPI, DIFS1) and the first mobile units (MT1, RPP1, DIPS1) exists in the IDLE LOCKED mode of the first mobile units (MT1, RPP1, DIPS1).

3. Telecommunication systems according to claim 1 or 2,
**characterized in that**
the synchronicity between the first base stations (BS1, RFP1, DIFS1) and the first mobile units (MT1, RPP1, DIPS1) exists in the ACTIVE LOCKED mode of the first mobile units (MT1, RPP1, DIPS1).

4. Telecommunication systems according to one of the claims 1 to 3, **characterized in that**
the telecommunication systems (TKS1...TKS7) are TDMA-based telecommunication systems.

5. Telecommunication systems according to claim 4,
**characterized in that**
the first base stations (BS1, RFP1, DIFS1) are asynchronous in each case to the second base stations (BS2, RFP2, DIFS2) in respect of the bit, time slot and/or time frame synchronicity.

6. Telecommunication systems according to one of the claims 1 to 5, **characterized in that**
the part of the first base stations (BS1, RFP1, DIFS1) sends the first messages (N1) with the first information at regular intervals.

7. Telecommunication systems according to one of the claims 1 to 6, **characterized in that**
the part of the first base stations (BS1, RFP1, DIFS1) sends the first messages (N1) with the first information automatically.

8. Telecommunication systems according to one of the claims 1 to 6, **characterized in that**
the part of the first base stations (BS1, RFP1, DIFS1) is prompted from the network side to send the first messages (N1) with the first information.

9. Telecommunication systems according to one of the claims 1 to 8, **characterized in that**
the first mobile units (MT1, RPP1, DIPS1) after receiving the first messages, depending on mobile unit location-specific receive criteria, are asynchronous to the first base stations (BS1, RFP1, DIFS1) for a predetermined period in order to search for the second base stations (BS2, RFP2, DIFS2).

10. Telecommunication systems according to claim 4 and 9,
**characterized in that**
the first mobile units (MT1, RPP1, DIPS1) are asynchronous in each case to the first base stations (BS1, RFP1, DIFS1) in respect of the bit, time slot or time frame synchronicity.

11. Telecommunication systems according to claim 9,
**characterized in that**
the first mobile units (MT1, RPP1, DIPS1), after they have looked for the second base stations (BS2, RFP2, DIFS2), interrupt the further search for a predetermined period of time.

12. Telecommunication systems according to claim 11,
**characterized in that**
the first mobile units (MT1, RPP1, DIPS1) have time counters (ZZ) for recording the period of time.

13. Telecommunication systems according to claim 12,
**characterized in that**
the first base stations (BS1, RFP1, DIFS1), by wireless transmission of the messages, load the time counters (ZZ) of the first mobile units (MT1, RPP1, DIPS1) with the predetermined period of time as a start value.

14. Telecommunication systems according to claim 13,
**characterized in that**
the first base stations (BS1, RFP1, DIFS1) feature memory (SP) in which the period is stored in each case.

15. Telecommunication systems according to claim 13 or 14,
**characterized in that**
the period of time is able to be conveyed to the first base stations (BS1, RFP1, DIFS1) on the network side.

16. Telecommunication systems according to one of the claims 9 to 15 and according to claim 4, **characterized in that**
The period of time is a multiple of the time slot or time frame.

17. Telecommunication systems according to one of the claims 9 to 16, **characterized in that**
the first mobile units (MT1, RPP1, DIPS1), if the attempt to search for the second base stations (BS2, RFP2, DIFS2) is unsuccessful, repeat the search processes at regular intervals.

18. Telecommunication systems according to one of the claims 9 to 17, **characterized in that**
the mobile unit location-specific receive criteria are the values dropping below mobile unit location-specific receive field strength threshold values.

19. Telecommunication systems according to claim 18,
**characterized in that**
the mobile unit location-specific receive field strength values and threshold values are of equal size for the initiation of inter-cell handover.

## Revendications

1. Systèmes de télécommunications pour des réseaux de télécommunications sans fil au moins partiellement asynchrones, en particulier des systèmes DECT pour des réseaux DECT au moins partiellement asynchrones, avec des premières stations de base (BS1, RFP1, DIFS1) qui sont synchrones par rapport à des premières parties mobiles (MT1, RPP1, DIPS1) et dans le voisinage desquelles est située respectivement au moins une deuxième station de base (BS2, RFP2, DIFS2) qui est respectivement asynchrone par rapport aux premières stations de base (BS1, RFP1, DIFS1), les stations de base (BS1, RFP1, DIFS1, BS2, RFP2, DIFS2) et des premières stations mobiles (MT1, RPP1, DIPS1) pouvant être reliées par la transmission sans fil de messages, **caractérisés en ce que** des premiers messages (N1) avec des premières informations sont émis au moins temporairement au moins par une partie de premières stations de base (BS1, RFP1, DIFS1), les informations indiquant que les premières stations de base (BS1, RFP1, DIFS1) sont chacune entourées d'au moins l'une des deuxièmes stations de base (BS2, RFP2, DIFS2).

2. Systèmes de télécommunications selon la revendication 1, **caractérisés en ce qu'**il y a synchronisme entre les premières stations de base (BS1, RFP1, DIFS1) et les premières parties mobiles (MT1, RPP1, DIPS1) dans le mode IDLE LOCKED des premières parties mobiles (MT1, RPP1, DIPS1).

3. Systèmes de télécommunications selon la revendication 1 ou 2, **caractérisés en ce qu'**il y a synchronisme entre les premières stations de base (BS1, RFP1, DIFS1) et les premières parties mobiles (MT1, RPP1, DIPS1) dans le mode ACTIVE LOCKED des premières parties mobiles (MT1, RPP1, DIPS1).

4. Systèmes de télécommunications selon l'une des revendications 1 à 3, **caractérisés en ce que** les systèmes de télécommunications (TKS1 ... TKS7) sont des systèmes de télécommunications basés sur le TDMA.

5. Systèmes de télécommunications selon la revendication 4, **caractérisés en ce que** les premières stations de base (BS1, RFP1, DIFS1) sont respectivement asynchrones par rapport à la / aux deuxième(s) station(s) de base (BS2, RFP2, DIFS2) au regard du synchronisme de bits, entre créneaux temporels et/ou trames temporelles.

6. Systèmes de télécommunications selon l'une des revendications 1 à 5, **caractérisés en ce que** la partie des premières stations de base (BS1, RFP1, DIFS1) émet régulièrement les premiers messages (N1) avec les premières informations.

7. Systèmes de télécommunications selon l'une des revendications 1 à 6, **caractérisés en ce que** la partie des premières stations de base (BS1, RFP1, DIFS1) émet automatiquement les premiers messages (N1) avec les premières informations.

8. Systèmes de télécommunications selon l'une des revendications 1 à 6, **caractérisés en ce que** la partie des premières stations de base (BS1, RFP1, DIFS1) est déclenchée côté réseau pour émettre les premiers messages (N1) avec les premières informations.

9. Systèmes de télécommunications selon l'une des revendications 1 à 8, **caractérisés en ce que** les premières parties mobiles (MT1, RPP1, DIPS1) deviennent asynchrones par rapport aux premières stations de base (BS1, RFP1, DIFS1) après la réception des premiers messages en fonction de critères de réception spécifiques à l'emplacement des parties mobiles pour une durée de temps prédéterminée, pour chercher les deuxièmes stations de base (BS2, RFP2, DIFS2).

10. Systèmes de télécommunications selon la revendication 4 et 9, **caractérisés en ce que** les premières parties mobiles (MT1, RPP1, DIPS1) sont respectivement asynchrones par rapport aux premières stations de base (BS1, RFP1, DIFS1) au regard du synchronisme de bits, entre créneaux temporels et/ou trames temporelles.

11. Systèmes de télécommunications selon la revendication 9, **caractérisés en ce que** les premières parties mobiles (MT1, RPP1, DIPS1), après avoir cherché les deuxièmes stations de base (BS2, RFP2, DIFS2), interrompent la suite de la recherche pour un laps de temps prédéterminé.

12. Systèmes de télécommunications selon la revendication 11, **caractérisés en ce que** les premières parties mobiles (MT1, RPP1, DIPS1) comportent des compteurs de temps (ZZ) pour capter le laps de temps.

13. Systèmes de télécommunications selon la revendication 12, **caractérisés en ce que** les premières stations de base (BS1, RFP1, DIFS1), par la transmission sans fil des messages, chargent les compteurs de temps (ZZ) des premières parties mobiles (MT1, RPP1, DIPS1) avec le laps de temps prédéterminé comme valeur de départ.

14. Systèmes de télécommunications selon la revendication 13, **caractérisés en ce que** les premières stations de base (BS1, RFP1, DIFS1) comportent des mémoires (SP) dans lesquelles les laps de temps sont respectivement stockés.

15. Systèmes de télécommunications selon la revendication 13 ou 14, **caractérisés en ce que** le laps de temps peut être envoyé, côté réseau, sur les premières stations de base (BS1, RFP1, DIFS1).

16. Systèmes de télécommunications selon l'une des revendications 9 à 15 et selon la revendication 4, **caractérisés en ce que** le laps de temps est un multiple du créneau temporel ou de la trame temporelle.

17. Systèmes de télécommunications selon l'une des revendications 9 à 16, **caractérisés en ce que,** étant donné des essais vains de chercher les deuxièmes stations de base (BS2, RFP2, DIFS2), les premières parties mobiles (MT1, RPP1, DIPS1) répètent les opérations de recherche à intervalles de temps réguliers.

18. Systèmes de télécommunications selon l'une des revendications 9 à 17, **caractérisés en ce que** les critères de réception spécifiques à l'emplacement des parties mobiles sont le dépassement par le bas de valeurs seuils de l'intensité du champ de réception spécifiques à l'emplacement des parties mobiles.

19. Systèmes de télécommunications selon la revendication 18, **caractérisés en ce que** les valeurs seuils de l'intensité du champ de réception spécifiques à l'emplacement des parties mobiles et les valeurs seuils pour l'initialisation d'un transfert intercellulaire (Inter Cell Handover) sont de même grandeur.
